# EUROPEAN PATENT SPECIFICATION

(11) **EP 3 500 762 B1**
(45) Date of publication and mention of the grant of the patent: **09.08.2023**
(21) Application number: 17844031.9
(22) Date of filing: 09.08.2017
(51) Int. Cl.: F16B 39/10, B60B 3/16, E01B 11/38

(54) **A LOCKING PLATE UNIT AND A VEHICLE COMPRISING SUCH A LOCKING PLATE UNIT**
VERRIEGELUNGSPLATTENEINHEIT UND FAHRZEUG MIT SOLCH EINER VERRIEGELUNGSPLATTENEINHEIT
ENSEMBLE PLAQUE DE VERROUILLAGE ET VÉHICULE COMPRENANT UN TEL ENSEMBLE PLAQUE DE VERROUILLAGE

(30) Priority: 22.08.2016 SE 1651122
(43) Date of publication of application: 26.06.2019
(73) Proprietor: Scania CV AB, 151 87 Södertälje (SE)
(72) Inventor: TIDLUND, Matthias, 144 33 Rönninge (SE)
(74) Representative: Scania CV AB
(86) International application number: PCT/SE2017/050804
(87) International publication number: WO 2018/038660

(56) References cited:
- EP-A1- 2 993 361
- WO-A1-00/78648
- WO-A1-2005/080806
- DE-A1- 19 519 761
- DE-A1- 19 545 092
- DE-A1- 19 640 143
- DE-B- 1 143 364
- GB-A- 2 340 575
- US-A- 720 769
- US-A- 720 769
- US-A- 2 707 507
- US-A- 3 490 508
- US-A- 4 893 975
- US-A- 5 407 310
- US-A1- 2002 141 845
- US-A1- 2015 251 487
- US-B1- 6 811 363

## Description

### TECHNICAL FIELD

The present invention relates to a locking plate unit and a vehicle comprising such a locking plate unit. The invention more specifically relates to a locking plate unit configured to counter rotational torque applied on the unit during mounting.

### BACKGROUND

Locking plates of various types are commonly known for locking components of screw joints, such that they do not unintentionally loosen when being attached to a structure of some sort. Such locking plates are typically adapted to lock two screws/bolts or nuts arranged in parallel and are typically arranged between the screws/nuts while mounting the screws/nuts. With a plurality of components mounting/tightening of the screw/nut may be complicated. Many known locking plates are arranged under the screw head or the nut, such that it is clamped between the screw/nut and the structure when the screw/nut is tightened. This, however, will make the screw/nut protrude more from the structure to which it is attached, which could be a problem in narrow spaces. Document US720769 A shows such a locking plate for nuts, which is arranged and clamped underneath the nuts. Locking plates are also commonly known, which are arranged to counter rotational torque applied on the screw/nut during the fastening of the screw/nut. For example, when attaching a screw joint to a structure, a screw is typically passed through a hole in the structure from one direction and a nut is arranged on the screw from the other direction. When the nut is tightened on the screw the applied rotational torque must be countered by holding the screw head or the screw will start rotating. A locking plate countering the torque may thus be advantageous when arranging screw joints in narrow spaces where it is difficult to fit a tool to manually counter the torque.

One problem that exists with locking plates irrespective of its purpose is that it is difficult to dismantle the locking plate and thereby difficult to dismount the screw/nut from the side where the locking plate is located. This restricts disassembly to be performed from only one direction. Document US3490508 A shows a nut or bolt retainer consisting of a removable locking plate with forkshaped end portions. The locking plate is bendable and can thus be removed by applying a force under the plate and bending it upwards. Document DE1143364 B discloses a locking plate consisting of an M-shaped sheet metal adapted to be used with a specific type of hexagonal screw or nut, wherein the locking plate is adapted to fit into a slot in the screw head/nut. The locking plate can be removed by bending the legs of the locking plate. DE 1 954 092 discloses a locking plate locking two equally spaced fasteners, whereby the locking plate has arms on its opposing ends partially surrounding the fasteners.

### SUMMARY OF THE INVENTION

Despite known solutions in the field, there is still a need to develop a locking plate unit, which facilitates mounting and dismounting of standard screw joints from an arbitrary axial direction.

An object of the present invention is to achieve an advantageous locking plate unit, which facilitates the mounting of a screw joint to a structure, specifically in narrow spaces.

Another object of the present invention is to achieve an advantageous locking plate unit, which facilitates the dismounting of a screw joint, specifically in narrow spaces.

The herein mentioned objects are achieved by a locking plate unit and a vehicle comprising such a locking plate unit according to the independent claims.

According to an aspect of the present invention a locking plate unit adapted to be attached to a structure is provided in accordance with appended claim 1. Preferred embodiments are defined in the dependent claims.

Further objects, advantages and novel features of the present invention will become apparent to one skilled in the art from the following details, and also by putting the invention into practice. Whereas the invention is described below, it should be noted that it is not restricted to the specific details described. Specialists having access to the teachings herein will recognise further applications, modifications and incorporations within other fields, which are within the scope of the invention, whereby the scope of the invention is defined by the appended set of claims.

### BRIEF DESCRIPTION OF THE DRAWINGS

For fuller understanding of the present invention and further objects and advantages of it, the detailed description set out below should be read together with the accompanying drawings, in which the same reference notations denote similar items in the various drawings, and in which:
- Figure 1: schematically illustrates a vehicle according to an embodiment of the invention;
- Figures 2a-2b: schematically illustrate a locking plate unit according to embodiments of the invention;
- Figure 3: schematically illustrates a locking plate unit according to an embodiment of the invention;
- Figure 4: schematically illustrates a locking plate of a locking plate unit according to embodiments of the invention; and
- Figure 5: schematically illustrates a locking plate unit according to an embodiment of the invention.

### DETAILED DESCRIPTION OF THE DRAWINGS

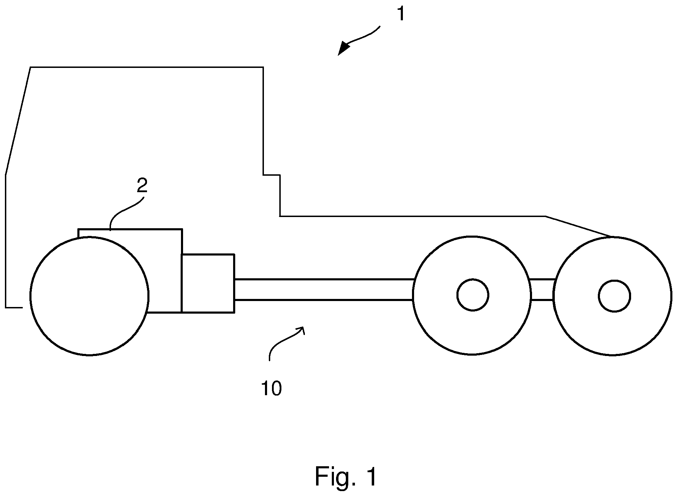

Figure 1 schematically shows a side view of a vehicle 1 comprising a propulsion unit 2. The vehicle 1 comprises a chassis 10. The vehicle may further comprise at least one locking plate unit (not shown) mounted on a chassis structure. The vehicle 1 may be a heavy vehicle, e.g. a truck or a bus. The vehicle 1 may alternatively be a passenger car. The vehicle may be manually operated, remotely operated or autonomously operated.

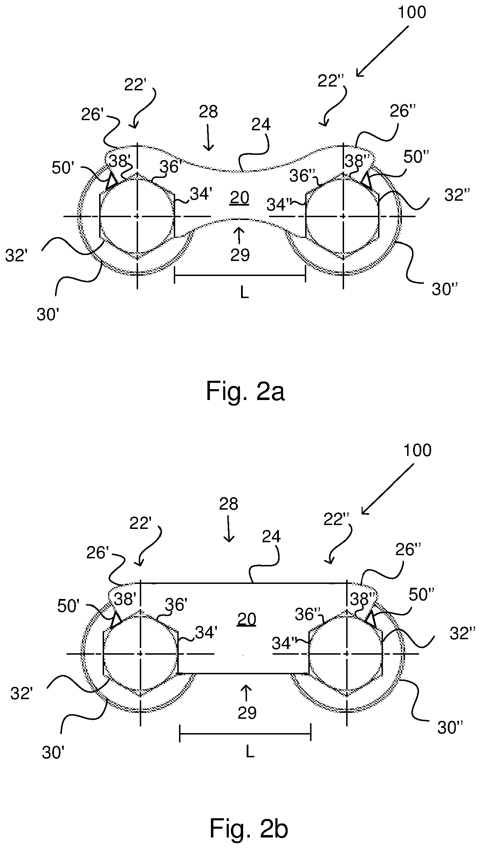

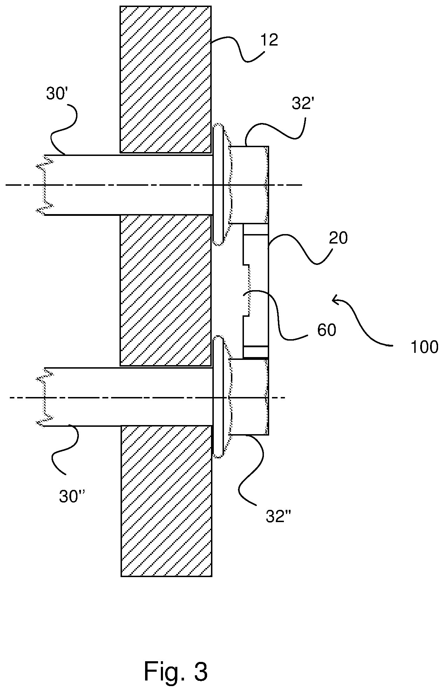

Figure 2a schematically illustrates a locking plate unit 100 according to an embodiment of the invention. The locking plate unit 100 is adapted to be attached to a structure 12. The structure 12 may be part of a chassis 10 in a vehicle 1 as described in Figure 1. This is further illustrated in Figure 3. The locking plate unit 100 comprises a locking plate 20; a first fastener 30' and a second fastener 30", each fastener 30', 30" comprising a hexagonal portion 32'. 32", wherein the locking plate 20 comprises a first end section 22'; a second end section 22" and a centre section 24 between the two end sections 22', 22", wherein the centre section 24 of the locking plate 20 is arranged between the hexagonal portions 32', 32" of the fasteners 30', 30" to counter a rotational torque applied on any of the fasteners 30', 30", such that the fasteners 30', 30" do not rotate. The fasteners 30', 30" are adhered to the locking plate 20 at a first adhesion point 50' between the hexagonal portion 32' of the first fastener 30' and the first end section 22' and at a second adhesion point 50" between the hexagonal portion 32" of the second fastener 30" and the second end section 22".

The first fastener 30' and the second fastener 30" may be a screw, bolt or a nut. The first fastener 30' and the second fastener 30" are suitably arranged in parallel with the centre section 24 of the locking plate 20 in between. When the fastener 30', 30" is a screw/bolt the hexagonal portion 32', 32" is suitably the screw head/bolt head. When the fastener 30', 30" is a nut the hexagonal portion 32', 32" is the nut itself. When the locking plate unit 100 is mounted on a structure 12, a second part of a screw joint is suitably engaged with each fastener 30', 30" of the locking plate unit 100 and a rotational torque is thereby applied on the fasteners 30', 30". By arranging the locking plate 20 such that the centre section 24 is positioned between the hexagonal portions 32', 32" of the two fasteners 30', 30" the centre section 24 counters the rotational torque and the forces are absorbed by the centre section 24 of the locking plate 20. Also, since the locking plate 20 and the fasteners 30', 30" are adhered to each other the locking plate unit 100 constitutes a single component which is easy to handle. This way, the fasteners 30', 30" are prevented from rotating and the mounting of the locking plate unit 100 is facilitated.

The fasteners 30', 30" are suitably adhered to the locking plate 20 by welding. The fasteners 30', 30" are suitably adhered to the locking plate 20 by seam welding. This way, the fasteners 30', 30" and the locking plate 20 are firmly attached to each other and thereby constitute a single unit. Alternatively, the fasteners 30', 30" are adhered to the locking plate 20 by an adhesive, such as glue suitable for adhesion between metal parts or plastic parts.

The locking plate 20 is elongated and extends longitudinally between the two fasteners 30', 30". The centre section 24 of the locking plate 20 is elongated wherein the length L of the centre section 24 determines the distance between the fasteners 30', 30"since the centre section 24 is arranged between the fasteners 30', 30". The length L of the centre section 24, and thus the distance between the fasteners 30', 30" depend on the size of the fasteners 30', 30". The larger the fasteners 30' 30" are the longer is the centre section 24. In this embodiment the centre section 24 has concave longitudinal sides. The centre section 24 is thus configured with a waist.

The first end section 22' suitably consists of a first arm portion 26' partly surrounding the circumference of the hexagonal portion 32' of the first fastener 30' and the second end section 22" suitably consists of a second arm portion 26" partly surrounding the circumference of the hexagonal portion 32" of the second fastener 30", wherein the first adhesion point 50' is positioned between the first arm portion 26' and the hexagonal portion 32' of the first fastener 30' and the second adhesion point 50" is positioned between the second arm portion 26" and the hexagonal portion 32" of the second fastener 30". The first arm portion 26' suitably extends from one short side of the centre section 24 and the second arm portion 26" suitably extends from the opposing short side of the centre section 24. The arm portions 26', 26" suitably extend symmetrically from the centre section 24, such that they form an extension of a longitudinal side of the centre section 24. A first longitudinal side 28 of the locking plate 24 thus comprises the length L of the centre section 24 and the length of the respective arm portion 26', 26", and the second longitudinal side 29 of the locking plate comprises only the length of the centre section 24. The first longitudinal side 28 is thereby longer than the second opposite longitudinal side 29.

The hexagonal portion 32', 32" of each fastener 30', 30" preferably has a first side 34', 34", a second side 36', 36" adjoining the first side 34', 34" and a third side 38', 38" adjoining the second side 36', 36", wherein the first side 34', 34" is arranged adjacent, and in parallel with, a short side of the centre section 24 of the locking plate 20. The fasteners 30', 30" are thus arranged such that their first sides 34', 34" are arranged in parallel and are facing each other. Each short side of the centre section 24 is thus arranged in engagement with a first side 34', 34" of a fastener 30', 30". The short side of the centre section 24 which is arranged in engagement with the first side 34', 34" suitably has the same length as the first side 34', 34". Alternatively, the short side of the centre section 24 which is arranged in engagement with the first side 34', 34" is longer than the first side 34', 34". The first side 34', 34" may be defined as the inner side. The centre section 24 abutting the first sides 34', 34" of the hexagonal portions 32', 32" will thereby counter any rotational torque applied on the fasteners 30', 30", such that they do not rotate. The first arm portion 26' and the second arm portion 26" of the end sections 22'. 22" suitably extend along the second side 36', 36" and at least a part of the third side 38', 38" of the respective hexagonal portion 32', 32". In this embodiment the first arm portion 26' and the second arm portion 26" extend along the second side 34', 34" and substantially half of the third side 38', 38". Thus, the locking plate 20 is arranged such that the centre section 24 abuts the first side 34', 34" of the hexagonal portion 32', 32" and the respective arm portion 26', 26" abuts the second side 34', 34" and at least half of the third side 38', 38". The arm portions 26', 26" may extend along the whole third side 38', 38". The arm portions 26', 26" are formed such that they correspond to the shape of the hexagonal portion 32', 32" on the fasteners 30', 30". Thus, the short sides of the centre section 24 together with the respective arm portion 26', 26" forms a half wrench-like portion corresponding to the shape of the hexagonal portion 32', 32" of the fasteners 30', 30".

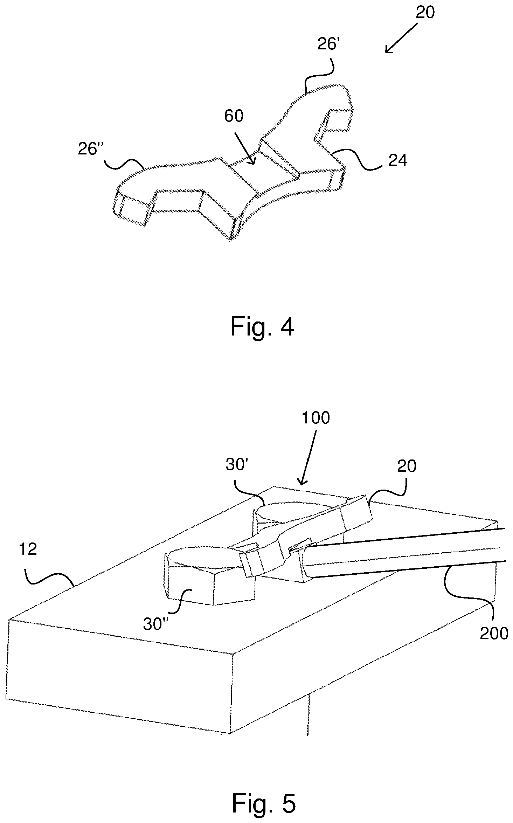

The adhesion point 50'. 50" between each fastener 30', 30" and the locking plate 20 is suitably positioned at the third side 38', 38" of the hexagonal portion 32', 32". Thus, the welds are positioned at the third sides 38', 38" of the hexagonal portions 32', 32". By adhering the fasteners 30', 30" to the locking plate 20 by welding at the third side 38', 38", the weld is positioned such that it is not affected by any rotational torque applied on the fasteners 30', 30". The centre section 24 is thus arranged to counter the torque and absorb the forces, whereby the weld remains intact. This way, the weld between the fasteners 30', 30" and the locking plate 20 can be relatively weak. The weld may have an effective throat which is less than 3 millimetres, preferably 2 millimetres. The weld is thus suitably configured such that it can hold the components together as a single unit 100 but does not have to be able to withstand forces acting on the unit 100 when attaching it to a structure 12. With a relatively weak weld between the fasteners 30', 30" and the locking plate 20, the locking plate 20 can be easily removed by breaking the weld. How the locking plate 20 is removed is described in relation to Figure 5.

The fasteners 30', 30" and the locking plate 20 are suitably made of steel. The fasteners 30', 30" and the locking plate 20 may alternatively comprise plastic.

Figure 2b schematically illustrates a locking plate unit 100 according to an embodiment of the invention. The locking plate unit 100 is configured like the locking plate unit 100 described in Figure 2a with the difference that the centre section 24 of the locking plate 20 is essentially rectangular. The centre section 24 does thus have straight longitudinal sides instead of concave longitudinal sides. The longitudinal sides 28, 29 of the locking plate unit 100 are thus essentially straight.

Figure 3 schematically illustrates a locking plate unit 100 according to an embodiment of the invention. The locking plate unit 100 is suitably configured as described in Figure 2a or 2b. The locking plate unit 100 is herein mounted on a structure 12. In this embodiment the fasteners 30', 30" are screws/bolts and the hexagonal portions 32', 32" are thus the screw heads. The screws/bolts 30', 30" may be of similar length or they may have different lengths. The locking plate unit 100 is suitably mounted by passing the screws/bolts 30', 30" through holes in the structure 12 from one side of the structure 12 and subsequently arranging nuts (not shown) on the screws/bolts 30', 30" on the other side of the structure 12. When the nuts are tightened the locking plate 20 will prevent the screws/bolts 30', 30" from rotating.

The locking plate 20 suitably comprises a recess 60 at a longitudinal side of the centre section 24. The recess 60 is suitably adapted to face the structure 12 to which the locking plate unit 100 is attached. The recess suitably extends from the first longitudinal side 28 of the locking plate unit 100. By forming a recess 60 in the locking plate 20 the weld between the screws/bolts 30', 30" and the locking plate 20 may be broken by inserting a tool in the recess and applying a force directed in the axial direction of the screws/bolts 30', 30". This way, the locking plate 20 can easily be dismounted. The recess 60 is suitably inclined such that it corresponds to the shape of a slotted screw driver head. This way, a screw driver may be used in order to dismount the locking plate. This is further illustrated in Figure 4 and Figure 5.

The locking plate 20 is suitably arranged flush with the top surface of the hexagonal portions 32', 32" of the screws/bolts 30', 30". The thickness of the locking plate 20 is suitably less than the thickness of the hexagonal portion 32', 32" of the screws/bolts 30', 30". This way, there will always be a gap between the locking plate 20 and the structure 12 to which the locking plate unit 100 is attached. A tool can thereby be inserted underneath the locking plate 20 in order to break the weld and to dismount the locking plate 20. The locking plate 20 may be around 6 millimetres thick.

Figure 4 schematically illustrates a locking plate 20 of a locking plate unit 100 according to an embodiment of the invention. The locking plate 20 is suitably a part of a locking plate unit 100 as described in Figure 2a, 2b and 3. Herein the underside of the locking plate 20 is shown, i.e. the side adapted to face the structure 12 to which the locking plate unit 100 is to be attached. The recess 60 is herein inclined such that it corresponds to the shape of a slotted screw driver head. In this embodiment the recess 60 extends through the whole width of the centre section 24, from the first longitudinal side 28 of the locking plate unit 100 to the opposing longitudinal side 29. The recess 60 may alternatively extend from the first longitudinal side 28 of the locking plate unit 100 along a part of the width of the centre section 24. The width of the centre section 24 is defined as the distance from the first longitudinal side 28 of the locking plate unit 100 to the second longitudinal side 29 of the locking plate unit 100.

Figure 5 schematically illustrates a locking plate unit 100 according to an embodiment of the invention. The locking plate unit 100 is suitably configured as described in any of Figure 2a, 2b, 3 and 4. The locking plate unit 100 is here attached to a structure 12 and the figure shows how a tool 200 is used to apply a force from underneath the locking plate 20 to break the adhesion between the fasteners 30', 30" and the locking plate 20. By inserting a tool 200 in the recess 60 in the locking plate 20 a force is applied upwards, in the axial direction of the fasteners 30', 30", which will break the adhesion between the fasteners 30', 30" and the locking plate 20. Since the adhesion is positioned where it is not affected by forces caused by an applied rotational torque the adhesion can be configured such that it is strong enough to hold the fasteners 30', 30" and the locking plate 20 together as a single unit but also weak enough to be broken manually by applying a force in the axial direction of the fasteners 30', 30".

The foregoing description of the preferred embodiments of the present invention is provided for illustrative and descriptive purposes. It is not intended to be exhaustive or to restrict the invention to the variants described. Many modifications and variations will obviously be apparent to one skilled in the art. The embodiments have been chosen and described in order best to explain the principles of the invention and its practical applications and hence make it possible for specialists to understand the invention for various embodiments and with the various modifications appropriate to the intended use.

## Claims

1. A locking plate unit (100) adapted to be attached to a structure (12), the locking plate unit (100) comprising a locking plate (20); a first fastener (30') and a second fastener (30"), each fastener (30', 30") comprising a hexagonal portion (32', 32"), wherein the locking plate (20) comprises a first end section (22'); a second end section (22") and a centre section (24) between the two end sections (22', 22"), wherein the centre section (24) of the locking plate (20) is arranged between the hexagonal portions (32', 32") of the fasteners (30', 30") to counter a rotational torque applied on any of the fasteners (30', 30"), to prevent rotation of the fasteners (30', 30"), wherein the first end section (22') consists of a first arm portion (26') partly surrounding the circumference of the hexagonal portion (32') of the first fastener (30') and the second end section (22") consists of a second arm portion (26") partly surrounding the circumference of the hexagonal portion (32") of the second fastener (30"), wherein the hexagonal portion (32', 32") of each fastener (30', 30") has a first side (34', 34"), a second side (36', 36") adjoining the first side (34', 34") and a third side (38', 38") adjoining the second side (36', 36"), wherein the first side (34', 34") is arranged adjacent, and in parallel with, a short side of the centre section (24), wherein the first arm portion (26') and the second arm portion (26") extends along the second side (36', 36"), **characterized in that** the first arm portion (26') and the second arm portion (26") extends along at least a part of the third side (38', 38") of the respective hexagonal portion (32', 32"), wherein the fasteners (30', 30") are adhered to the locking plate (20) by welding at a first adhesion point (50') between the hexagonal portion (32') of the first fastener (30') and the first end section (22') of the locking plate (20) and at a second adhesion point (50") between the hexagonal portion (32") of the second fastener (30") and the second end section (22") of the locking plate (20), wherein the first adhesion point (50') is positioned between the first arm portion (26') and the third side (38') of the hexagonal portion (32') of the first fastener (30') and the second adhesion point (50") is positioned between the second arm portion (26") and the third side (38") of the hexagonal portion (32") of the second fastener (30").

2. The locking plate unit (100) according to claim 1, wherein the weld at the respective adhesion point (50', 50") has an effective throat which is less than 3 millimetres.

3. The locking plate unit (100) according to any of the preceding claims, wherein the thickness of the locking plate (20) is smaller than the thickness of the hexagonal portions (32', 32") of the fasteners (30', 30").

4. The locking plate unit (100) according to any of the preceding claim, wherein the locking plate (20) comprises a recess (60) extending from a longitudinal side of the centre section (24), the recess (60) being arranged to face the structure (12) to which the locking plate unit (100) is adapted to be attached.

5. The locking plate unit (100) according to claim 4, wherein the recess (60) is inclined such that it corresponds to the shape of a slotted screw driver head.

6. A vehicle (1), **characterized in that** it comprises a locking plate unit (100) according to any of claims 1-5.

## Patentansprüche

1. Verriegelungsplatteneinheit (100), die dazu ausgebildet ist, an einer Struktur (12) angebracht zu werden, wobei die Verriegelungsplatteneinheit (100) eine Verriegelungsplatte (20), ein erstes Befestigungselement (30') und ein zweites Befestigungselement (30") umfasst, wobei jedes Befestigungselement (30', 30") einen sechseckigen Abschnitt (32', 32") umfasst, wobei die Verriegelungsplatte (20) einen ersten Endabschnitt (22'), einen zweiten Endabschnitt (22") und einen Mittelabschnitt (24) zwischen den beiden Endabschnitten (22', 22") umfasst, wobei der Mittelabschnitt (24) der Verriegelungsplatte (20) zwischen den sechseckigen Abschnitten (32', 32") der Befestigungselemente (30', 30") angeordnet ist, um einem auf ein Befestigungselement (30', 30") ausgeübten Drehmoment entgegenzuwirken, um eine Drehung der Befestigungselemente (30', 30") zu verhindern, wobei der erste Endabschnitt (22') einen ersten Armabschnitt (26') aufweist, der den Umfang des sechseckigen Abschnitts (32') des ersten Befestigungselements (30') teilweise umgibt, und der zweite Endabschnitt (22") einen zweiten Armabschnitt (26") aufweist, der den Umfang des sechseckigen Abschnitts (32") des zweiten Befestigungselements (30") teilweise umgibt, wobei der sechseckige Abschnitt (32', 32") jedes Befestigungselements (30', 30") eine erste Seite (34', 34"), eine an die erste Seite (34', 34") angrenzende zweite Seite (36', 36") und eine an die zweite Seite (36', 36") angrenzende dritte Seite (38', 38") aufweist, wobei die erste Seite (34', 34") benachbart und parallel zu einer kurzen Seite des Mittelabschnitts (24) angeordnet ist, wobei sich der erste Armabschnitt (26') und der zweite Armabschnitt (26") entlang der zweiten Seite (36', 36") erstrecken, **dadurch gekennzeichnet, dass** sich der erste Armabschnitt (26') und der zweite Armabschnitt (26") wenigstens entlang eines Teils der dritten Seite (38', 38") des jeweiligen sechseckigen Abschnitts (32', 32") erstrecken, wobei die Befestigungselemente (30', 30") durch Schweißen an einem ersten Haftpunkt (50') zwischen dem sechseckigen Abschnitt (32') des ersten Befestigungselements (30') und dem ersten Endabschnitt (22') der Verschlussplatte (20) und an einem zweiten Haftpunkt (50") zwischen dem sechseckigen Abschnitt (32") des zweiten Befestigungselements (30") und dem zweiten Endabschnitt (22") der Verschlussplatte (20) an der Verschlussplatte (20) haften, wobei der erste Haftpunkt (50') zwischen dem ersten Armabschnitt (26') und der dritten Seite (38') des sechseckigen Abschnitts (32') des ersten Befestigungselements (30') und der zweite Haftpunkt (50") zwischen dem zweiten Armabschnitt (26") und der dritten Seite (38") des sechseckigen Abschnitts (32") des zweiten Befestigungselements (30") angeordnet sind.

2. Verriegelungsplatteneinheit (100) nach Anspruch 1, wobei die Schweißstelle am jeweiligen Haftpunkt (50', 50") eine effektive Kehle aufweist, die kleiner ist als 3 Millimeter.

3. Verriegelungsplatteneinheit (100) nach einem der vorangehenden Ansprüche, wobei die Dicke der Verriegelungsplatte (20) kleiner ist als die Dicke der sechseckigen Abschnitte (32', 32") der Befestigungselemente (30', 30").

4. Verriegelungsplatteneinheit (100) nach einem der vorangehenden Ansprüche, wobei die Verriegelungsplatte (20) eine Aussparung (60) aufweist, die sich von einer Längsseite des Mittelabschnitts (24) erstreckt, wobei die Aussparung (60) derart angeordnet ist, dass sie zu der Struktur (12) weist, an der die Verriegelungsplatteneinheit (100) angebracht werden kann.

5. Verriegelungsplatteneinheit (100) nach Anspruch 4, wobei die Aussparung (60) derart geneigt ist, dass sie der Form eines Kopfes eines Schlitzschraubendrehers entspricht.

6. Fahrzeug (1), **dadurch gekennzeichnet, dass** es eine Verriegelungsplatteneinheit (100) nach einem der Ansprüche 1-5 umfasst.

## Revendications

1. Unité de plaque de verrouillage (100) adaptée pour être attachée à une structure (12), l'unité de plaque de verrouillage (100) comprenant une plaque de verrouillage (20) ; un premier élément de fixation (30') et un deuxième élément de fixation (30"), chaque élément de fixation (30', 30") comprenant une partie hexagonale (32', 32"), dans laquelle la plaque de verrouillage (20) comprend une première section d'extrémité (22') ; une deuxième section d'extrémité (22") et une section centrale (24) entre les deux sections d'extrémité (22', 22"), dans laquelle la section centrale (24) de la plaque de verrouillage (20) est disposée entre les parties hexagonales (32', 32") des éléments de fixation (30', 30") pour contrer un couple de rotation appliqué sur l'un quelconque des éléments de fixation (30', 30"), pour empêcher la rotation des éléments de fixation (30', 30"), dans laquelle la première section d'extrémité (22') est constituée d'une première partie de bras (26') entourant partiellement la circonférence de la partie hexagonale (32') du premier élément de fixation (30') et la deuxième section d'extrémité (22") est constituée d'une deuxième partie de bras (26") entourant partiellement la circonférence de la partie hexagonale (32") du deuxième élément de fixation (30"), dans laquelle la partie hexagonale (32', 32") de chaque élément de fixation (30', 30") a un premier côté (34', 34"), un deuxième côté (36', 36") contiguë au premier côté (34', 34") et un troisième côté (38', 38") contiguë au deuxième côté (36', 36"), dans laquelle le premier côté (34', 34") est disposé adjacent un côté court de la section centrale (24), et parallèlement à celui-ci, dans laquelle la première partie de bras (26') et la deuxième partie de bras (26") s'étendent le long du deuxième côté (36', 36"), **caractérisée en ce que** la première partie de bras (26') et la deuxième partie de bras (26") s'étendent le long d'au moins une part du troisième côté (38', 38") de la partie hexagonale respective (32', 32"), dans laquelle les éléments de fixation (30', 30") adhèrent à la plaque de verrouillage (20) par soudage au niveau d'un premier point d'adhésion (50') entre la partie hexagonale (32') du premier élément de fixation (30') et la première section d'extrémité (22') de la plaque de verrouillage (20) et au niveau d'un deuxième point d'adhésion (50") entre la partie hexagonale (32") du deuxième élément de fixation (30") et la deuxième section d'extrémité (22") de la plaque de verrouillage (20), dans laquelle le premier point d'adhésion (50') est positionné entre la première partie de bras (26') et le troisième côté (38') de la partie hexagonale (32') du premier élément de fixation (30') et le deuxième point d'adhésion (50") est positionné entre la deuxième partie de bras (26") et le troisième côté (38") de la partie hexagonale (32") du deuxième élément de fixation (30") .

2. Unité de plaque de verrouillage (100) selon la revendication 1, dans laquelle la soudure au niveau du point d'adhésion respectif (50', 50") a une gorge effective qui est inférieure à 3 millimètres.

3. Unité de plaque de verrouillage (100) selon l'une quelconque des revendications précédentes, dans laquelle l'épaisseur de la plaque de verrouillage (20) est plus petite que l'épaisseur des parties hexagonales (32', 32") des éléments de fixation (30', 30").

4. Unité de plaque de verrouillage (100) selon l'une quelconque des revendications précédentes, dans laquelle la plaque de verrouillage (20) comprend un évidement (60) s'étendant depuis un côté longitudinal de la section centrale (24), l'évidement (60) étant agencé pour faire face à la structure (12) à laquelle l'unité de plaque de verrouillage (100) est adaptée pour être attachée.

5. Unité de plaque de verrouillage (100) selon la revendication 4, dans laquelle l'évidement (60) est incliné de telle sorte qu'il correspond à la forme d'une tête de tournevis à pointe plate.

6. Véhicule (1), **caractérisé en ce qu'**il comprend une unité de plaque de verrouillage (100) selon l'une quelconque des revendications 1-5.
